# EUROPÄISCHE PATENTSCHRIFT

(11) **EP 0 805 956 B1**
(45) Veröffentlichungstag und Bekanntmachung des Hinweises auf die Patenterteilung: **24.10.2001**
(21) Anmeldenummer: 95941594.4
(22) Anmeldetag: 19.12.1995
(51) Int. Cl.: G01D 11/28, B60Q 3/04, H05B 33/20, C09K 11/02

(54) **ANZEIGEEINRICHTUNG, INSBESONDERE FÜR KRAFTFAHRZEUGE**
DISPLAY ARRANGEMENT, IN PARTICULAR FOR MOTOR VEHICLES
SYSTEME D'AFFICHAGE, NOTAMMENT POUR AUTOMOBILES

(30) Priorität: 27.01.1995 DE 19502542
(43) Veröffentlichungstag der Anmeldung: 12.11.1997
(73) Patentinhaber: ROBERT BOSCH GMBH, 70442 Stuttgart (DE)
(72) Erfinder: REINHART, Karl-Franz, D-74189 Weinsberg (DE); KNOLL, Peter, D-76275 Ettlingen (DE); HÜPPAUFF, Martin, D-70563 Stuttgart (DE); SCHMIDT, Claus, D-71106 Magstadt (DE)
(86) Internationale Anmeldenummer: DE9501812
(87) Internationale Veröffentlichungsnummer: WO9623200

(56) Entgegenhaltungen:
- EP-A- 0 554 569
- US-A- 4 356 429
- US-A- 4 559 582
- US-A- 5 231 329
- US-A- 5 265 071
- US-A- 5 320 063
- DATABASE WPI Week 9251 Derwent Publications Ltd., London, GB; AN 92-418706 & JP,A,04 312 790 (SUMITOMO CHEM CO LTD) , 4.November 1992

## Beschreibung

Die Erfindung betrifft eine Anzeigeeinrichtung, insbesondere für Kraftfahrzeuge, nach dem Oberbegriff des Anspruchs 1.

### Stand der Technik

Anzeigeeinrichtungen für Kraftfahrzeuge sind in vielfältiger Form bekannt. Diese dienen dazu, dem Fahrzeugführer bestimmte Informationen über die gegenwärtige Fahrtsituation, wie beispielsweise Fahrtgeschwindigkeit, Drehzahl usw. anzuzeigen. Andererseits ist der Fahrzeugführer auf bestimmte Gefahrensituationen, beispielsweise Überschreiten einer zulässigen Betriebstemperatur usw., aufmerksam zu machen. Als Anzeigeinstrumente sind analoge Zeigerinstrumente, Displays, Leuchtdioden usw. bekannt. Diese Anzeigeeinrichtungen sind bei Dunkelheit mittels eines sogenannten Nachtdesign zu beleuchten. Hierbei ist bekannt, die Beleuchtung mittels Glühbirnen oder mittels eines Feldes von anorganischen, punktförmigen Leuchtdioden zu realisieren. Da bei unterschiedlichen Kraftfahrzeugtypen und/oder unterschiedlichen Anzeigen innerhalb eines Kraftfahrzeuges unterschiedliche farbige Beleuchtungen wünschenswert sind, muß die Beleuchtungseinrichtung hierauf abgestimmt werden.

Bei der Verwendung von Glühbirnen wird die gewünschte Beleuchtungsfarbe durch einen speziellen Farbdruck erreicht, der nur sehr aufwendig herstellbar ist. Bei der Verwendung von Leuchtdioden werden eine Vielzahl verschiedenfarbiger Leuchtdioden miteinander kombiniert, um eine bestimmte gewünschte resultierende Farbe zu erreichen. In allen Fällen ist nachteilig, daß sowohl bei der Beleuchtung der Anzeigeeinrichtung mittels Leuchtdioden und mittels Glühbirnen eine sehr komplizierte und aufwendige Beleuchtungsstruktur geschaffen werden muß, um eine geforderte homogene Beleuchtung, insbesondere Hinterleuchtung der Anzeigeinstrumente, zu erreichen. Darüber hinaus ist in beiden Fällen ein relativ großer Einbauraum notwendig.

Weiterhin ist bekannt, die Zeigerfahnen von analogen Anzeigeinstrumenten mittels geformter Lichtleiter zu beleuchten. Hierbei ist jedoch nachteilig, daß durch die zusätzlichen Lichtleiter die Masse der Zeiger erhöht wird, so daß bei allgemein eingesetzten Drehmagnetquotientenmeßwerken keine ausreichende Zeigerdynamik erreichbar ist.

Darüber hinaus ist bekannt, Anzeigeinstrumente flächig mittels elektrolumineszierenden, anorganischen Schichtsystemen zu hinterleuchten. Hierbei ist jedoch nachteilig, daß für die anorganischen elektrolumineszierenden Schichtsysteme als Betriebsspannung hohe Wechselspannungen zur Verfügung stehen müssen. Da in Kraftfahrzeugen als Batteriespannung eine Gleichspannung zur Verfügung steht, ist eine entsprechende Spannungswandlung notwendig. Diese Anwendung ist somit sehr aufwendig und erfordert darüber hinaus durch das Betreiben mit hohen Wechselspannungen einen zusätzlichen elektromagnetischen Verträglichkeitsschutz für weitere elektronische Systeme des Kraftfahrzeugs.

Aus JP-A 4 312 790 ist eine Leuchtquelle in Form einer elektrolumineszierenden Lampe bekannt, die für das Display oder die Amaturenbrettbeleuchtung eines Fahrzeugs verwendbar ist. Die dort beschriebene elektrolumineszierende Lampe wird mit einer Gleichspannung zwischen 20V und 40V betrieben. Im einzelnen wird in JP-A 4 312 790 auf einer Aluminiumfolie zunächst eine dicke, elektrisch isolierende Schicht aus Bariumtitanat-Pulver und organischen Komponenten abgeschieden. Auf dieser Schicht wird dann eine weitere, im wesentlichen organische Schicht abgeschieden, die ein Phosphat enthält, und die nach dem Trocknen eine fluoreszierende Schicht auf der isolierenden Schicht bildet. Abschließend wird auf dieser Schichtanordnung eine transparente Elektrode aus Indium-Zinn-Oxid (ITO) aufgebracht. Ähnliche elektrolumineszierende Anordnungen mit organischen, lichtemittierenden Substanzen sind weiter auch aus US 5,231,329, aus EP 0 554 569 A2 und US 4,356,429 bekannt. In allen diesen Fällen ist die organische lichtemittierende Substanz zwischen geeigneten, zumindest teilweise transparenten, flächig ausgebildeten Elektroden angeordnet. Aus US 4,559,582 ist schließlich ein Anzeigeinstrument mit einem beleuchtenden Zeiger bekannt, der in Form eines Lichtleiters ausgebildet und mittels einer separaten, in dem Anzeigeinstrument integriertem Leuchtquelle beleuchtet wird. Die Erzeugung des Lichtes in dieser Leuchtquelle erfolgt dabei mit Hilfe einer elektrolumineszierenden Anordnung mit einer elektrolumineszierenden Substanz, wobei die elektrolumineszierende Anordnung den zu dem Zeiger des Anzeigeinstrumentes führenden Lichtleiter bereichsweise umgibt.

### Vorteile der Erfindung

Die erfindungsgemäße Anzeigeeinrichtung mit den im Anspruch 1 genannten Merkmalen bietet demgegenüber den Vorteil, daß in einfacher Weise eine Beleuchtung von Anzeigeinstrumenten möglich ist. Dadurch, daß die Beleuchtungseinrichtung von einer, wenigstens eine organische lichtemittierende Substanz aufweisenden Leuchtquelle gebildet wird, kann durch eine Auswahl der die organischen Verbindungen besitzenden Substanz und eine Formgebung der Leuchtquelle jedes beliebige Beleuchtungsproblem, insbesondere in Kraftfahrzeugen, gelöst werden. Vorteilhaft ist vorgesehen, daß die die organischen Verbindungen besitzende Substanz flächenhaft zwischen zwei flächigen Elektroden angeordnet werden kann, von denen vorzugsweise eine lichtdurchlässig ist. Bei Bedarf können nach einer vorteilhaften Ausgestaltung der Erfindung zwischen den Elektroden und der lichtemittierenden Schicht weitere Schichten angeordnet werden, die nur eine Ladungsträgerart transportieren. Dadurch wird die Lichtausbeute des Schichtsystems bei bestimmten Materialien erhöht. Hierdurch ist ein Schichtsystem erreicht, dessen Dicke lediglich durch die Dicke der Elektroden, der Substanz, der eventuellen Zwischenschichten und des Trägers bestimmt ist, und daher einen sehr geringen Einbauraum benötigt. Darüber hinaus kann dieses Schichtsystem mittels herkömmlicher mechanischer Arbeitsverfahren, beispielsweise Stanzen, Ausschneiden usw., in jede beliebige Form gebracht und damit jedem beliebigen Anzeigeinstrument angepaßt werden, so daß unterschiedliche Beleuchtungsaufgaben gelöst werden können.

Weiter ist vorteilhaft, daß durch die Ausbildung dieses Schichtsystems in die Form eines Zeigers, beispielsweise für analoge Anzeigeinstrumente, eine Doppelfunktion, nämlich das Anzeigen einer bestimmten Situation und das Beleuchten der Anzeige, realisiert werden kann. Insbesondere ist es damit möglich, dieses Schichtsystem in die Form von Leuchtanzeigen, beispielsweise Leuchtziffern, zu bringen und so eine Kombination einer Anzeige und einer Beleuchtung zu erreichen.

Weitere vorteilhafte Ausgestaltungen der Erfindung ergeben sich aus den übrigen in den Unteransprüchen genannten Merkmalen.

So ist vorteilhaft, daß die Leuchtquelle mit der elektrolumineszierenden organischen Substanz direkt mit Gleichspannung im Niedervoltbereich betrieben werden kann. Hierdurch ist ein einfaches Anschließen an die in Kraftfahrzeugen vorhandene Batteriespannung, die durch die Kraftfahrzeugbatterie vorgegeben wird, möglich. Es sind lediglich Schaltelemente vorzusehen, die ein Verbinden der Leuchtquelle mit der Betriebsspannung ermöglichen.

### Zeichnung

Die Erfindung wird nachfolgend in Ausführungsbeispielen an Hand der zugehörigen Zeichnungen näher erläutert. Es zeigen:
- Figur 1: eine schematische Schnittdarstellung durch eine Leuchtquelle;
- Figur 2: schematisch eine erste Anwendungsmöglichkeit der Leuchtquelle.
- Figur 3: schematisch eine zweite Anwendungsmöglichkeit der Leuchtquelle;

### Beschreibung der Ausführungsbeispiele

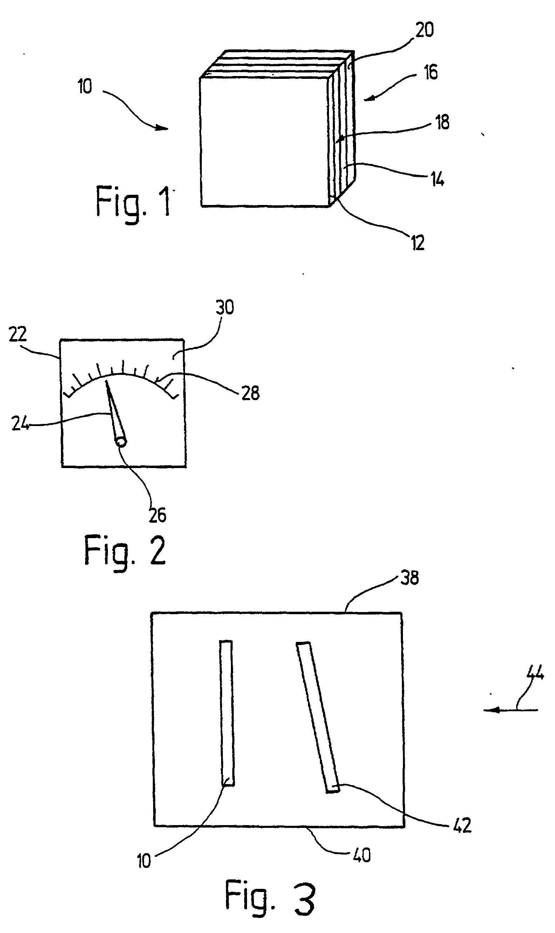

Figur 1 zeigt eine Leuchtquelle 10. Die Leuchtquelle 10 besteht aus einer ersten Elektrode 12, einer zweiten Elektrode 14 sowie einer zwischen den Elektroden 12 und 14 angeordneten Substanz 18, die elektrolumineszierende organische Verbindungen enthält. Die Elektrode 14 ist auf einem Träger 20 aufgebracht. Sowohl die Elektroden 12 und 14 als auch der Träger 20 können aus dünnen folienhaften Werkstoffen bestehen. Die Elektrode 12, die Substanz 18, die Elektrode 14 und der Träger 20, wobei der Träger 20 nicht notwendigerweise verbunden sein muß, bilden ein Schichtsystem 16.

Nach einem nicht dargestellten Ausführungsbeispiel kann die Schicht, die die organischen Verbindungen enthält, aus einem Schichtsystem bestehen. Hierbei können einzelne zusätzliche Schichten vorgesehen sein, die nur eine bestimmte Ladungsträgerart transportieren. Dadurch wird bei der Verwendung bestimmter wählbarer Substanzen in den einzelnen Schichten die Lichtausbeute erhöht.

Nach einer ersten Ausführungsvariante ist die Elektrode 12 lichtdurchlässig, während die Elektrode 14 und der Träger 20 lichtundurchlässig sind. Hierbei kann auf der der Substanz 18 zugewandten Seite der Elektrode 14 zusätzlich eine elektrisch leitende, reflektierende Schicht aufgebracht sein. Nach einer weiteren Ausführungsvariante sind sowohl die Elektroden 12 und 14 als auch der Träger 20 lichtdurchlässig. Nach einer dritten Ausführung ist der Träger 20 und die Elektrode 16 lichtdurchlässig, während die Elektrode 12 lichtundurchlässig ist.

Die Elektroden 12 und 14 sind mit einer Spannungsquelle, vorzugsweise einer Kraftfahrzeugbatterie eines Kraftfahrzeuges, verbindbar. Wird die Spannungsquelle über ein geeignetes Schaltmittel an die Elektroden 12 und 14 angeschlossen, fließt durch die elektrolumineszierende, die organischen Verbindungen aufweisende Substanz 18 ein Strom, so daß die Leuchtquelle 10 ein Licht emittiert. Für den Fall, daß ausschließlich die Elektrode 12 lichtdurchlässig ist, wird das Licht mittels der Leuchtquelle 10 ausschließlich in Richtung der Elektrode 12 abgestrahlt. Bei der Ausführungsvariante, bei der beide Elektroden 12 und 14 sowie der Träger 20 lichtdurchlässig sind, erfolgt ein Ausstrahlen des Lichtes sowohl in Richtung der Elektrode 12 als auch in Richtung der Elektrode 14. Bei der dritten Ausführungsvariante, bei der nur der Träger 20 und die Elektrode 16 lichtdurchlässig sind, erfolgt die Lichtemission nur in Richtung des Trägers 20. Je nach Auswahl der lichtemittierenden Substanz 18 können unterschiedliche Farben mit Hilfe der Leuchtquelle 10 erzeugt werden. Die Farbe des emittierten Lichtes wird durch die chemische Struktur der verwendeten organischen Substanz 18 bestimmt. Da eine Vielzahl von verschieden elektrolumineszierenden organischen Substanzen 18 bekannt sind, die in unterschiedlichsten Spektralbereichen Licht emittieren können, ist es möglich, eine breite Palette von Leuchtquellen 10 einzusetzen, die an jeden beliebigen, gewünschten Farbwunsch anpaßbar sind. Als lichtemittierende organische Substanzen 18 kommen beispielsweise Polymere, niedermolekulare organische Verbindungen, Monomere und molekular dotierte Polymere in Betracht.

Das Aufbringen der organischen Substanz 18 auf eine der Elektroden 12 oder 14 kann beispielsweise mittels Aufspritzen, Siebdruck, Laminieren oder weiteren bekannten Verfahrensschritten erfolgen. Ein Haftverbund der organischen Substanz 18 mit den Elektroden 12 und 14 kann beispielsweise durch Erwärmen erfolgen. In der organischen Substanz 18 vorhandene Molekülgruppen gehen hierbei eine Bindung mit Molekülgruppen der Elektroden 12 und 14 ein, so daß es zu einer Haftwirkung kommt.

Die in Figur 1 gezeigte Leuchtquelle 10 kann beispielsweise als relativ großes, flächenhaftes Schichtelement hergestellt werden. Aus diesem großen flächenhaften Schichtelement lassen sich durch einfache mechanische Bearbeitung, wie beispielsweise Stanzen, Ausschneiden usw., Leuchtquellen 10 in jeder beliebigen Form und Gestalt erzeugen. Insbesondere dann, wenn die Elektroden 12 und 14 sowie der Träger 20 aus dünnen flexiblen Folien bestehen, können auch von einer Ebene abweichende Leuchtquellen 10, beispielsweise konkav oder konvex gekrümmte Strukturen, geschaffen werden.

In den Figuren 2 und 3 sind mögliche Anwendungsmöglichkeiten der in Figur 1 allgemein erläuterten Leuchtquelle 10 dargestellt, ohne jedoch hiermit einen Anspruch auf Vollständigkeit zu erheben. Gemäß Figur 2 kann ein analoges Anzeigeelement 22 einen Zeiger 24 aufweisen, der aus einer Leuchtquelle 10 besteht. Die Kontur des Zeigers 24 ist in einfacher Weise aus einer flächenhaft vorliegenden Leuchtquelle 10 ausstanzbar. Die Kontaktierung der Elektroden 12 und 14 erfolgt über hier nicht dargestellte Zuleitungen über den Drehpunkt 26 des Zeigers 24. Bei entsprechender Ausbildung der Elektroden 12 und 14 kann auf die zusätzliche Anordnung eines Trägers 20 verzichtet werden, so daß sich insgesamt eine Gewichtseinsparung für den Zeiger 24 ergibt. Dieser kann somit ohne weiteres in an sich bekannten Drehmagnetquotientenmeßwerken eingesetzt werden, ohne daß es zu einer Beeinflussung der Zeigerdynamik kommt. Durch eine Beleuchtung des Zeigers 24 ist bei Dunkelheit sehr gut der jeweilige anzuzeigende Zustand erkennbar. Gleichzeitig kann die die Skala 28 aufweisende Grundplatte 30 ebenfalls aus einer Leuchtquelle 10 bestehen.

Diese kann hierzu beispielsweise einen Träger 20 aufweisen, der die die Skala 28 ergebenden Durchbrüche aufweist. Der Träger 20 ist hierbei lichtundurchlässig, so daß das von der organischen Substanz 18 emittierte Licht ausschließlich durch die Durchbrüche (Lichtdurchtrittsöffnungen) hindurchtritt. Durch die Verwendung von unterschiedlichen organischen Substanzen 18 für den Zeiger 24 und für die Grundplatte 30 kann eine sehr gute Ablesbarkeit des Anzeigeinstruments 22 gewährleistet werden. Selbstverständlich kann für die organischen Substanzen 18 des Zeigers 24 und der Grundplatte 30 die gleiche organische Substanz 18 verwendet werden, so daß jeweils ein gleichfarbiges Licht emittiert wird. Das in Figur 2 gezeigte Anzeigeinstrument 22 baut trotz seiner guten Ausleuchtung extrem klein, so daß es vielfältig, insbesondere in Kraftfahrzeugen, eingesetzt werden kann. Auf die Anordnung weiterer, zusätzlich von außen das Anzeigeinstrument 22 anstrahlende Leuchtquellen kann verzichtet werden.

In Figur 3 ist ein weiteres Anzeigeinstrument 38 gezeigt. Dieses besitzt eine in einem Gehäuse 40 angeordnete Anzeigeeinrichtung 42, die sowohl ein analoges Anzeigeinstrument als auch ein Display sein kann. Innerhalb des Gehäuses 40 ist hinter dem Anzeigeinstrument 42 eine Leuchtquelle 10 analog dem in Figur 1 gezeigten Beispiel angeordnet. Bei Anlegen einer Gleichspannung an die Elektroden 12 und 14 der Leuchtquelle 10 wird die organische Substanz 18 ein Licht emittieren, das innerhalb des Gehäuses 40 die Anzeigeeinrichtung 42 indirekt beleuchtet. Aus hier mit dem Pfeil 44 angegebener Blickrichtung eines Fahrzeugführers wird somit eine gute Erkennbarkeit der Anzeigeeinrichtung 42 gewährleistet.

Insgesamt wird an Hand der aufgeführten Beispiele deutlich, daß es mit der in Figur 1 gezeigten Leuchtquelle 10 möglich ist, jede beliebige Beleuchtungsaufgabe bzw. Beleuchtungsfunktion bei Anzeigeinstrumenten jeglicher Art wahrzunehmen. Durch die einfache Ansteuerbarkeit der Leuchtquelle 10 und ihre praktisch unbegrenzte Formbarkeit ist auf engstem zur Verfügung stehenden Einbauraum jede beliebige Beleuchtung, insbesondere eines Anzeigeinstrumentes, denkbar.

## Patentansprüche

1. Anzeigeeinrichtung, insbesondere für Kraftfahrzeuge, mit wenigstens einem Anzeigeinstrument und mindestens einer Beleuchtungseinrichtung für das Anzeigeinstrument, die von einer, wenigstens eine organische lichtemittierende Substanz aufweisenden, insbesondere auf einem Träger befindlichen Leuchtquelle gebildet wird, **dadurch gekennzeichnet, dass** die organische lichtemittierende Substanz (18) zwischen zwei Elektroden (12, 14) angeordnet ist, von denen mindestens eine lichtdurchlassig ist, wobei die lichtemittierende Substanz (18) mit den Elektroden (12, 14) einen Zeiger (24) der Anzeigeeinrichtung (22) bildet.

2. Anzeigeeinrichtung nach Anspruch 1, **dadurch gekennzeichnet, dass** die Substanz (18) zwischen den Elektroden (12, 14) flächenhaft angeordnet ist.

3. Anzeigeeinrichtung nach Anspruch 1 oder 2, **dadurch gekennzeichnet, dass** zwischen der Substanz (18) und mindestens einer der Elektroden (12, 14) wenigstens eine weitere Schicht angeordnet ist, die nur eine Ladungstragerart einer Betriebsspannung transportiert.

4. Anzeigeeinrichtung nach Anspruch 1, **dadurch gekennzeichnet, dass** der Träger (20) zumindest bereichsweise lichtdurchlässig ist und insbesondere Lichtdurchtrittsöffnungen aufweist.

5. Anzeigeeinrichtung nach Anspruch 1, **dadurch gekennzeichnet, dass** der Trager (20) und die Elektroden (12, 14) flexibel sind.

6. Anzeigeeinrichtung nach Anspruch 1 oder 5, **dadurch gekennzeichnet, dass** der Trager (20) und die Elektroden (12, 14) aus folienhaften dünnen Werkstoffen bestehen.

7. Anzeigeeinrichtung nach mindestens einem der vorangehenden Anspruche, **dadurch gekennzeichnet, dass** die Beleuchtungseinrichtung in dem Anzeigeinstrument (22, 32) sowohl zur Anzeige einer bestimmten Situation als auch die Beleuchtung des Anzeigeinstrumentes (22) dient.

8. Anzeigeeinrichtung nach mindestens einem der vorangehenden Anspruche, **dadurch gekennzeichnet, dass** neben der Beleuchtungseinrichtung für das Anzeigeinstrument, bei der die Elektroden (12, 14) mit der organischen lichtemittierenden Substanz (18) einen Zeiger (24) des Anzeigeinstrumentes (22) bilden, eine weitere Beleuchtungseinrichtung des Anzeigeinstrumentes vorgesehen ist, die von einer eine organische lichtemittierende Substanz aufweisenden Leuchtquelle (10) gebildet ist.

9. Anzeigeeinrichtung nach mindestens einem der vorangehenden Ansprüche, **dadurch gekennzeichnet, dass** durch die Auswahl der Substanz (18) verschiedenfarbiges Licht emittierbar ist.

10. Anzeigeeinrichtung nach mindestens einem der vorangehenden Ansprüche, **dadurch gekennzeichnet, dass** als Substanz (18) Polymere, insbesondere molekular dotierte Polymere, oder Monomere verwendet werden.

11. Anzeigeeinrichtung nach mindestens einem der vorhangehenden Ansprüche, **dadurch gekennzeichnet, dass** die Leuchtquelle mittels mechanischer Arbeitsverfahren, insbesondere Stanzen oder Ausschneiden, herstellbar ist.

12. Anzeigeeinrichtung nach mindestens einem der vorangehenden Ansprüche, **dadurch gekennzeichnet, dass** die Leuchtquelle direkt mit Gleichspannung im Niedervoltbereich betrieben wird.

## Claims

1. Indicator device, in particular for motor vehicles, having at least one indicator instrument and at least one illumination device for the indicator instrument, which illumination device is formed by a light source which has at least one organic light-emitting substance and is located, in particular, on a carrier, **characterized in that** the organic, light-emitting substance (18) is arranged between two electrodes (12, 14), at least one of which is translucent, with the light-emitting substance (18) together with the electrodes (12, 14) forming a pointer (24) for the indicator device (22).

2. Indicator device according to Claim 1, **characterized in that** the substance (18) is arranged flat between the electrodes (12, 14).

3. Indicator device according to Claim 1 or 2, **characterized in that** there is arranged between the substance (18) and at least one of the electrodes (12, 14) at least one further layer which transports only one charge carrier type of an operating voltage.

4. Indicator device according to Claim 1, **characterized in that** the carrier (20) is at least partially translucent and in particular has light passage openings.

5. Indicator device according to Claim 1, **characterized in that** the carrier (20) and the electrodes (12, 14) are flexible.

6. Indicator device according to Claim 1 or 5, **characterized in that** the carrier (20) and the electrodes (12, 14) are composed of thin, filmy materials.

7. Indicator device according to at least one of the preceding claims, **characterized in that** the illumination device in the indicator instrument (22, 23) is used not only to indicate a specific situation, but also to illuminate the indicator instrument (22).

8. Indicator device according to at least one of the preceding claims, **characterized in that**, in addition to the illumination device for the indicator instrument, in which the electrodes (12, 14) together with the organic light-emitting substance (18) form a pointer (24) for the indicator instrument (22), a further illumination device is provided for the indicator instrument, which illumination device is formed from a light source (10) which has an organic light-emitting substance.

9. Indicator device according to at least one of the preceding claims, **characterized in that** light of various colours can be emitted as the result of the selection of the substance (18).

10. Indicator device according to at least one of the preceding claims, **characterized in that** polymers, in particular molecularly doped polymers, or monomers are used as substance (18).

11. Indicator device according to at least one of the preceding claims, **characterized in that** the illumination source can be produced by means of mechanical working processes, in particular stamping or cutting out.

12. Indicator device according to at least one of the preceding claims, **characterized in that** the light source is operated directly with DC voltage in the low-voltage range.

## Revendications

1. Système d'affichage, en particulier pour véhicules automobiles, comportant au moins un instrument d'affichage et au moins un dispositif d'éclairage de l'instrument d'affichage, ce système étant formé par une source lumineuse montée en particulier sur un support et comportant au moins une substance organique émettant de la lumière,
**caractérisé en ce que**
la substance organique (18) émettant de la lumière est montée entre deux électrode (12, 14) dont l'une au moins est transparente, cette substance (18) formant avec les électrodes (12, 14) une aiguille (24) de l'instrument d'affichage (22).

2. Système d'affichage selon la revendication 1,
**caractérisé en ce que**
la substance (18) est disposée sur une surface adhérente entre les deux électrodes (12, 14).

3. Système d'affichage selon la revendication 1 ou 2,
**caractérisé en ce qu'**
entre la substance (18) et au moins une des électrodes (12, 14) est interposée au moins une autre couche qui transporte seulement une sorte de porteur de charge d'une tension de service.

4. Système d'affichage selon la revendication 1,
**caractérisé en ce que**
le support (20) est au moins localement, transparent et en particulier présente des ouvertures de passage de la lumière.

5. Système d'affichage selon la revendication 1,
**caractérisé en ce que**
le support (20) et les électrodes (12, 14) sont flexibles.

6. Système d'affichage selon la revendication 1 ou 5,
**caractérisé en ce que**
le support (20) et les électrodes (12, 14) sont faits de matériaux en feuilles adhérentes minces.

7. Système d'affichage selon au moins l'une quelconque des revendications précédentes,
**caractérisé en ce que**
le dispositif d'éclairage, dans l'instrument d'affichage (22, 32) sert à la fois à afficher une situation définie et à éclairer l'instrument d'affichage (22).

8. Système d'affichage selon au moins l'une quelconque des revendications précédentes,
**caractérisé en ce qu'**
en plus du dispositif d'éclairage de l'instrument d'affichage, dans lequel les électrodes (12, 14) forment avec la substance organique luminescente (18) une aiguille (24) de l'instrument d'affichage (22), il est prévu un autre dispositif d'éclairage de cet instrument constitué par une source lumineuse (10) comportant une substance organique émettant de la lumière.

9. Système d'affichage selon au moins l'une quelconque des revendications précédentes,
**caractérisé en ce que**
selon le choix de la substance (18) la lumière émise peut avoir différentes couleurs.

10. Système d'affichage selon au moins l'une quelconque des revendications précédentes,
**caractérisé en ce que**
comme substance (18) on peut utiliser des polymères, en particulier des polymères dopés moléculairement, ou des monomères.

11. Système d'affichage selon au moins l'une quelconque des revendications précédentes,
**caractérisé en ce que**
la source lumineuse peut être fabriquée par des procédés mécaniques d'usinage, en particulier par emboutissage ou découpe.

12. Système d'affichage selon au moins l'une quelconque des revendications précédentes,
**caractérisé en ce que**
la source lumineuse est alimentée directement en courant continu à basse tension.
